# EUROPÄISCHE PATENTSCHRIFT

(11) **EP 0 600 345 B1**
(45) Veröffentlichungstag und Bekanntmachung des Hinweises auf die Patenterteilung: **20.05.1998**
(21) Anmeldenummer: 93118825.4
(22) Anmeldetag: 23.11.1993
(51) Int. Cl.: F16L 23/16, F16L 55/172

(54) **Leckabdichtungsvorrichtung für Rohrleitungen**
Leak sealing device for pipes
Dispositif d'étanchement de fuites pour tuyaux

(30) Priorität: 01.12.1992 DE 9216331 U
(43) Veröffentlichungstag der Anmeldung: 08.06.1994
(73) Patentinhaber: Furmanite Technische Dienstleistungen GmbH, 60327 Frankfurt (DE)
(72) Erfinder: Osterlitz, Hermann, Dipl.-Ing., D-65189 Wiesbaden (DE); Grob, Oliver, D-42279 Wuppertal (DE)
(74) Vertreter: Weber, Otto Ernst, Dipl.-Phys.

(56) Entgegenhaltungen:
- EP-A- 0 243 549
- AU-B- 6 313 190
- FR-A- 974 966
- FR-A- 2 605 378
- US-A- 2 699 960
- US-A- 4 240 650

## Beschreibung

Die Erfindung betrifft eine Leckabdichtungsvorrichtung mit einem Gehäuse, welches zumindest zwei Gehäuseteile aufweist und an zwei benachbarten Seitenflächen jeweils eine Öffnung hat, deren Querschnittsfläche auf die Gehäuseteile aufgeteilt ist, wobei die Gehäusewandung im Bereich einer jeden Öffnung mit einer die Öffnung jeweils umgebenden Dichtung versehen ist und die Gehäuseteile miteinander und mit einer Rohrleitung dicht verbindbar sind, wobei das Gehäuse einen Hohlraum umschließt, durch den eine abzudichtende Stelle einer Rohrleitung umgeben und eine Flanschverbindung in der Rohrleitung umschlossen ist, und wobei im Bereich des Hohlraums wenigstens eine die Gehäusewandung durchdringende Durchlaßeinrichtung vorhanden ist.

Eine derartige Leckabdichtungsvorrichtung ist aus der EP 0 243 549 A2 bekannt. Diese Leckabdichtungsvorrichtung besteht aus zwei Gehäusehälften, die klammerartig um eine abzudichtende Rohrleitung gelegt und gegeneinander verspannt werden. Im Bereich einer jeden Öffnung in der Gehäusewandung sind axial versetzt zwei Dichtungen angeordnet, die die Gehäusewandung gegen das umschlossene Rohrleitungsstück abdichten. Zusätzlich sind im Bereich einer jede Dichtung aufnehmenden Dichtungsnut sowie zwischen den Dichtungen die Gehäusewandung durchdringende Injektionsöffnungen vorgesehen, durch die eine Dichtungsmasse in die Dichtungsnut zwischen die vorhandene Dichtung und die Gehäusewandung gespritzt werden kann, um die vorhandene Dichtung an das Rohr anzupressen bzw. um Dichtungsmaterial in den sich zwischen den beiden vorhandenen Dichtungen ergebenden Hohlraum einzuspritzen. Auf diese Weise soll der mit dem Leck in Verbindung stehende vom Gehäuse umschlossene Hohlraum zuverlässig abgedichtet werden. Der vom Gehäuse umschlossene Hohlraum füllt sich jedoch mit dem aus der Rohrleitung durch das Leck austretenden Fluid.

Aus der FR-A-2 605 378 ist eine Leckabdichtungsvorrichtung für undichte Verbindungsbereiche von Druckleitungen bekannt, welche ein abdichtend zwei Gehäusehälften umfassendes Abdichtungsgehäuse aufweist. An jedem Ende des Abdichtungsgehäuses im Bereich der jeweiligen Rohraustrittsöffnung sind zwei Dichtringe jeweils so voneinander beabstandet, daß dazwischen je eine Ringkammer entsteht. Diese werden mit einer Dichtungsmasse verfüllt, die durch hierfür vorgesehene Öffnungen eingebracht wird. Der eigentliche undichte Bereich der Verbindungsstelle wird von einem zwischen den Ringkammern sich erstreckendem Hohlraum im Abdichtgehäuse umschlossen, welcher eine einzige Durchlaßeinrichtung zur Ableitung des Leckagefluids während des Einbringens der Dichtungsmaße in die Ringkammern an den axialen Rändern des Gehäuses oder zum Anschließen einer Druckmeßvorrichtung aufweist. Die Vorrichtung hat jedoch den Nachteil, daß an beiden Enden jeweils eine am gesamten Rohrumfang ausgebildete Dichtungsfläche gegen das Austreten des Fluids abgedichtet werden muß, obwohl die Fläche des eigentlichen Lecks zumeist wesentlich kleiner ist.

Der Erfindung liegt die **Aufgabe** zugrunde, eine Leckabdichtungsvorrichtung zu schaffen, welche eine besonders gute Abdichtwirkung erzielt, indem die abzudichtende Fläche minimiert wird.

Diese Aufgabe wird gemäß dem Schutzanspruch 1 dadurch gelöst, daß mehrere Durchlaßeinrichtungen vorgesehen sind, daß von den Durchlaßeinrichtungen jeweils mindestens eine in jedem der beiden axialen Abschnitte von einer der beiden Öffnungen bis zu der Flanschverbindung angeordnet ist, und daß der Hohlraum zwischen dem Gehäuse und der Rohrleitung mit einer durch die Durchlaßeinrichtungen eingebrachten Dichtungsmasse gefüllt ist.

Durch das Vorsehen der Durchlaßeinrichtungen zum Einbringen der Dichtungsmasse in den vom Gehäuse umschlossenen Hohlraum kann der auch von der bekannten Leckabdichtungsvorrichtung erzielte erste Abdichtungserfolg nach dem Anlegen der Leckabdichtungsvorrichtung an eine Rohrleitung weiter verbessert werden, indem durch die im Bereich des Hohlraums des Gehäuses vorgesehenen Durchlaßeinrichtungen ein Dichtungsmaterial in den Gehäusehohlraum injiziert wird.

Durch diese Maßnahme erreicht die erfindungsgemäße Leckabdichtungsvorrichtung eine besonders gute Abdichtwirkung, da lediglich eine Fläche der Größe des Lecks durch die eingebrachte Dichtungsmasse abgedichtet werden muß.

Durch das Vorhandensein von mehreren Durchlaßeinrichtungen wird ein weiterer Vorteil dadurch erzielt, daß eine Überbeanspruchung des geschädigten Bauteils durch unzulässigen Druck beim Einbringen der Dichtungsmaße nicht auftritt, da ein Dichtungsmittelaustrag an einer anderen Durchlaßeinrichtung bei Erreichen eines unzulässigen Druckanstiegs erfolgen kann.

Vorteilhaft ist die Ausbildung nach Anspruch 2, wobei die ventilartig ausgebildeten Durchlaßeinrichtungen das Austreten des Leckagefluids aus der Leckabdichtungsvorrichtung verhindern, wenn diese bereits an der Rohrleitung anliegt aber noch nicht mit einer Dichtungsmasse gefüllt ist. Vorteilhaft ist dabei auch die Ausgestaltung gemäß Anspruch 3, wodurch ein sicheres Einspritzen der Dichtungsmasse auch unter hohem Innendruck gewährleistet ist.

Insbesondere die Ausgestaltung gemäß Anspruch 4 gestattet ein schnelles Anlegen der Gehäuseteile an eine abzudichtende Rohrleitung und somit das schnelle Erzielen eines ersten Abdichtungserfolgs.

Die Ausgestaltung gemäß Anspruch 5 gestattet es, auch Rohrleitungsabschnitte abzudichten, die eine Flanschverbindung aufweisen, da das Gehäuse gemäß Anspruch 5 groß genug ist,

um auch die Flanschverbindung zu umschließen. Bei mittleren bis kleinen Rohrleitungsdurchmessern wird dies besonders vorteilhaft durch die Ausgestaltung gemäß Anspruch 6 erzielt.

Die Ausgestaltungen gemäß der Ansprüche 8 bis 10 sind besonders widerstandsfähig gegenüber hohen Innendrücken.

Die Erfindung wird nachfolgend anhand eines Beispiels unter Bezugnahme auf die Zeichnung näher erläutert, in dieser zeigt:
- Fig. 1: eine räumliche Ansicht einer erfindungsgemäßen Leckabdichtungsvorrichtung und
- Fig. 2: eine Längsschnittansicht einer Leckabdichtungsvorrichtung.

Die Leckabdichtungsvorrichtung besteht aus einem Gehäuse 1, das eine untere Gehäusehälfte 10 und eine obere Gehäusehälfte 11 aufweist. An zwei voneinander abgewandten Stirnseiten ist das Gehäuse mit jeweils einer Durchtrittsöffnung 14, 15 für eine abschnittsweise zu umschließende Rohrleitung 2 versehen. Die Öffnungen 14 und 15 erstrecken sich jeweils zur Hälfte ihrer Querschnittsfläche in die untere Gehäusehälfte 10 und in die obere Gehäusehälfte 11. In jeder Öffnung 14, 15 ist eine ringförmige Dichtung 16, 17 angeordnet, die das Gehäuse 1 gegenüber der Rohrleitung 2 abdichtet.

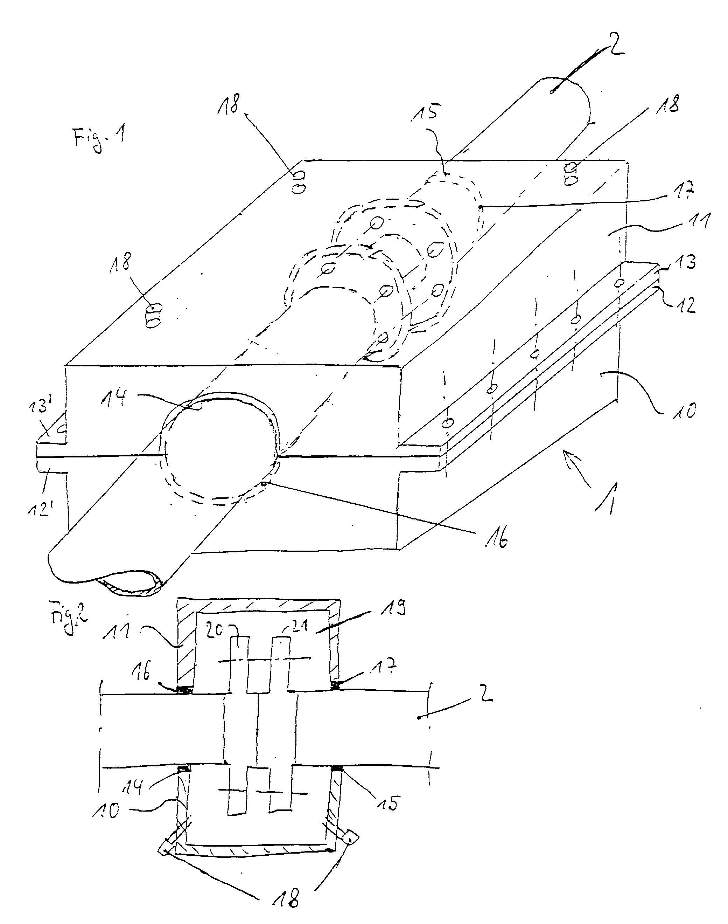

Die beiden Gehäusehälften 10 und 11 sind im Bereich ihrer Schnittfläche an den beiden Längsseiten mit jeweils einem Flansch 12, 12' bzw. 13, 13' versehen. Die beiden Schnittflächen der jeweiligen Gehäusehälften sind im zusammengesetzten Zustand mittels einer (nicht gezeigten) Dichtung gegeneinander abdichtbar und werden durch die Flansche 12, 13 bzw. 12', 13' durchgreifende, in Fig. 1 nur durch strichpunktierte Linien angedeutete Befestigungsmittel, wie beispielsweise Schrauben, gegeneinander verspannt. Anstelle der verschraubbaren Flanschverbindungen können auch Schnellverschlußvorrichtungen, wie beispielsweise Spannklammern, vorgesehen sein.

Im Bereich des vom Gehäuse 1 umschlossenen Hohlraums 19 sind eine Mehrzahl von Durchlaßeinrichtungen 18 vorgesehen, die die Gehäusewandung durchdringen und durch die eine Dichtungsmasse in den Gehäusehohlraum eingespritzt werden kann. Diese Durchlaßeinrichtungen sind vorzugsweise ventilartig ausgestaltet, so daß zwar das Einbringen einer Dichtmasse in den Hohlraum möglich ist, jedoch das aus dem Leck in den Hohlraum aus der Rohrleitung austretende Fluid nicht aus dem Gehäuse nach außen entweichen kann.

In Fig. 2 ist zu erkennen, daß die Innenabmessungen des Hohlraums 19, bezüglich der Rohrleitungsachse rechtwinklig gemessen, derart bemessen sind, daß in der Rohrleitung 2 vorgesehene Flanschverbindungen 20, 21 vom Gehäuse 1 umschließbar sind, so daß auch im Bereich von Flanschverbindungen auftretende Leckagen durch diese Leckabdichtungsvorrichtung abdichtbar sind.

Die Abdichtung eines Lecks in einer Rohrleitung erfolgt derart, daß zunächst die Gehäusehälften um den abzudichtenden Abschnitt der Rohrleitung herum angelegt und abdichtend gegeneinander verspannt werden. Dadurch ist eine erste wirksame Abdichtung der Leckage erfolgt. In einem weiteren Schritt wird durch die Durchlaßeinrichtungen 18 eine Dichtungsmasse, beispielsweise ein Compound, in den Hohlraum eingespritzt und dieser damit gefüllt.

Die Leckabdichtungsvorrichtungen können in vorgegebenen Grössen hergestellt und bevorratet werden, wobei sich die Außenabmessungen des Gehäuses an dem zu umschließenden Rohr und damit am Durchmesser der Öffnungen 14 bzw. 15 orientieren. Eine erste Gehäuseausführung kann dabei unwesentlich größer als der Rohrdurchmesser sein, während eine zweite Ausführungsform wesentlich größer als der Rohrdurchmesser ist und im Bereich der Leckage gelegene Flanschverbindungen mit umschließt. Da das Verhältnis von Rohrdurchmesser zu Flanschverbindung in Abhängigkeit von der Nennweite des jeweiligen Rohres genormt ist, kann ein Baukastensystem aus einer Vielzahl unterschiedlicher Gehäuse geschaffen werden, das für nahezu jeden Einsatzfall ein sofort passendes Gehäuse zur Verfügung stellt und eine erste Abdichtung einer auftretenden Leckage schnell gewährleistet, ohne daß aufwendige Vermessungs- und Anpassungsarbeiten an die Rohrleitung erfolgen müssen.

Die Dichtungen 16, 17 können erforderlichenfalls mit Drahtstützen und/oder Stützblechen verstärkt werden, um auch einem hohen Innendruck standzuhalten.

## Patentansprüche

1. Leckabdichtungsvorrichtung mit einem Gehäuse, welches zumindest zwei Gehäuseteile (10, 11) aufweist und an zwei teilbaren Seitenflächen jeweils eine Öffnung (14, 15) hat, deren Querschnittsfläche auf die Gehäuseteile (10, 11) aufgeteilt ist, wobei die Gehäusewandung im Bereich einer jeden Öffnung (14, 15) mit einer die Öffnung (14, 15) jeweils umgebenden Dichtung (16, 17) versehen ist und die Gehäuseteile (10, 11) miteinander und mit einer Rohrleitung (2) dicht verbindbar sind, wobei das Gehäuse einen Hohlraum (19) umschließt, durch den eine abzudichtende Stelle einer Rohrleitung (2) umgeben und eine Flanschverbindung (20, 21) in der Rohrleitung (2) umschlossen ist, und wobei im Bereich des Hohlraums (19) wenigstens eine die Gehäusewandung durchdringende Durchlaßeinrichtung (18) vorhanden ist,
dadurch **gekennzeichnet**,
a) daß mehrere Durchlaßeinrichtungen (18) vorgesehen sind,
b) daß von den Durchlaßeinrichtungen (18) jeweils mindestens eine in jedem der beiden axialen Abschnitte von einer der beiden Öffnungen (14, 15) bis zu der Flanschverbindung (20, 21) angeordnet ist, und
c) daß der Hohlraum (19) zwischen dem Gehäuse (1) und der Rohrleitung (2) mit einer durch die Durchlaßeinrichtungen (18) eingebrachten Dichtungsmasse gefüllt ist.

2. Leckabdichtungsvorrichtung nach Anspruch 1,
dadurch **gekennzeichnet,**
daß die Durchlaßeinrichtungen (18) ventilartig ausgebildet sind.

3. Leckabdichtungsvorrichtung nach einem der Ansprüche 1 oder 2,
dadurch **gekennzeichnet,**
daß die Durchlaßeinrichtungen (18) an ihrem außerhalb des Gehäuses (1) gelegenen Ende ein Kopplungsorgan aufweisen.

4. Leckabdichtungsvorrichtung nach einem der vorhergehenden Ansprüche,
dadurch **gekennzeichnet,**
daß die Gehäuseteile (10, 11) Schnellverschlußeinrichtungen aufweisen, mittels derer die Gehäuseteile miteinander verbindbar sind.

5. Leckabdichtungsvorrichtung nach einem der vorhergehenden Ansprüche,
dadurch **gekennzeichnet,**
daß der kleinste rechtwinklig zur Verbindungslinie der Gehäuseöffnungen gemessene Gehäusewandabstand im vom Gehäuse (1)umschlossenen Hohlraum (19) größer ist als der Durchmesser der größten Gehäuseöffnung (14, 15).

6. Leckabdichtungsvorrichtung nach einem der vorhergehenden Ansprüche,
dadurch **gekennzeichnet,**
daß der kleinste rechtwinklig zur Verbindungslinie der Gehäuseöffnungen gemessene Gehäusewandabstand im vom Gehäuse (1) umschlossenen Hohlraum (19) 1,5 bis 2,5 mal größer ist als der Durchmesser der größten Gehäuseöffnung (14, 15).

7. Leckabdichtungsvorrichtung nach einem der vorhergehenden Ansprüche,
dadurch **gekennzeichnet,**
daß das Gehäuse (1) quaderförmig ausgestaltet ist.

8. Leckabdichtungsvorrichtung nach einem der Ansprüche 1 bis 6,
dadurch **gekennzeichnet,**
daß das Gehäuse (1) zylinderförmig ausgestaltet ist.

9. Leckabdichtungsvorrichtung nach einem der vorhergehenden Ansprüche,
dadurch **gekennzeichnet,**
daß die Gehäuseteile an zumindest zwei Seiten mit einem Befestigungsflansch (12, 12', 13, 13') zur gegenseitigen abdichtenden Befestigung versehen sind.

10. Leckabdichtungsvorrichtung nach Anspruch 9,
dadurch **gekennzeichnet,**
daß die Befestigungsflansche (12, 12', 13, 13') an voneinander abgewandten Seiten des Gehäuses (1) gelegen sind.

## Claims

1. Leak sealing device with a casing, which has at least two casing parts (10, 11) and in each case one opening (14, 15) on two dividable lateral faces and whose cross-sectional surface is distributed over the casing parts (10, 11), the casing wall being provided in the vicinity of each opening (14, 15) with a seal (16, 17) in each case surrounding the opening (14, 15) and the casing parts (10, 11) are tightly connectable to a pipe (2) and to one another, the casing surrounding a cavity (19), through which a point on a pipe (2) to be sealed is enclosed and a flanged coupling (20, 21) in the pipe (2) is surrounded, and in the vicinity of the cavity (19) is provided at least one passage device (18) penetrating the casing wall, characterized in that
a) several passage devices (18) are provided,
b) that of said passage devices (18), at least one is located in each of the two axial portions of one of the two openings (14, 15) up to the flanged coupling (20, 21) and
c) the cavity (19) between the casing (1) and the pipe (2) is filled with a sealing compound introduced by the passage devices (18).

2. Leak sealing device according to claim 1, characterized in that the passage devices (18) have a valve-like construction.

3. Leak sealing device according to one of the claims 1 or 2, characterized in that the passage devices (18) have a coupling member at the end thereof located outside the casing (1).

4. Leak sealing device according to one of the preceding claims, characterized in that the casing parts (10, 11) have snap closure devices by means of which the casing parts are interconnectable.

5. Leak sealing device according to one of the preceding claims, characterized in that the smallest casing wall spacing, measured at right angles to the connecting line of the casing openings, in the cavity (19) surrounded by the casing (1) is larger than the diameter of the largest casing opening (14, 15).

6. Leak sealing device according to one of the preceding claims, characterized in that the smallest casing wall spacing, measured at right angles to the connecting line of the casing openings, in the cavity (19) surrounded by the casing (1) is 1.5 to 2.5 times larger than the diameter of the largest casing opening (14, 15).

7. Leak sealing device according to one of the preceding claims, characterized in that the casing (1) is parallelepipedic.

8. Leak sealing device according to one of the claims 1 to 6, characterized in that the casing (1) is cylindrical.

9. Leak sealing device according to one of the preceding claims, characterized in that on at least two sides, the casing parts are provided with an attachment flange (12, 12', 13, 13') for reciprocal, sealing attachment.

10. Leak sealing device according to claim 9, characterized in that the attachment flanges (12, 12', 13, 13') are positioned at remote sides of the casing (1).

## Revendications

1. Dispositif d'étanchement de fuite avec un boîtier, qui présente au moins deux parties (10,11) de boîtier et possède, sur deux surfaces latérales divisibles et pour chacune d'elles une ouverture (14, 15) dont la surface de section est répartie sur les parties (10, 11) du boîtier, la paroi du boîtier étant munie, au niveau de chaque ouverture (14, 15), d'un joint (16, 17) entourant l'ouverture (14, 15) et les parties (10, 11) du boîtier pouvant être raccordées de manière étanche l'une avec l'autre et avec une conduite (2), le boîtier enserrant un espace creux (19) qui entoure une zone à étancher d'une conduite (2) et enserre un assemblage à bride (20, 21) sur la conduite (2), et au moins un dispositif d'accès (18) traversant la paroi du boîtier étant présent au niveau de l'espace creux (19), ***caractérisé en ce que***
(a) plusieurs dispositifs d'accès (18) sont prévus,
(b) à chaque fois au moins l'un des dispositifs d'accès (18) est placé dans chacune des deux sections axiales situées entre l'une des deux ouvertures (14, 15) et l'assemblage à brides (20, 21), et
(c) l'espace creux (19) entre le boîtier (1) et la conduite (2) est rempli avec une masse d'étanchéité introduite par les dispositifs d'accès (18).

2. Dispositif d'étanchement de fuite selon la Revendication 1, ***caractérisé en ce que*** les dispositifs d'accès (18) sont conformés en clapet.

3. Dispositif d'étanchement de fuite selon la Revendication 1 ou 2, ***caractérisé en ce que*** les dispositifs d'accès (18) présentent un organe de couplage à leur extrémité située à l'extérieur du boîtier.

4. Dispositif d'étanchement de fuite selon l'une quelconque des Revendications précédentes, ***caractérisé en ce que*** les parties (10,11) du boîtier présentent des dispositifs de fermeture rapide, au moyen desquels les parties du boîtier peuvent être raccordées l'une à l'autre.

5. Dispositif d'étanchement de fuite selon l'une quelconque des Revendications précédentes, ***caractérisé en ce que*** la plus faible distance entre parois du boîtier, mesurée perpendiculaire - ment à la ligne de jonction des ouvertures du boîtier, dans l'espace creux (19) enserré par le boîtier (1), est supérieure au diamètre de la plus grande ouverture (14, 15) du boîtier.

6. Dispositif d'étanchement de fuite selon l'une quelconque des Revendications précédentes, ***caractérisé en ce que*** la plus faible distance entre parois du boîtier, mesurée perpendiculaire - ment à la ligne de jonction des ouvertures du boîtier, dans l'espace creux (19) enserré par le boîtier (1) est supérieure à 1,5 à 2 fois le diamètre de la plus grande ouverture (14, 15) du boîtier.

7. Dispositif d'étanchement de fuite selon l'une quelconque des Revendications précédentes, ***caractérisé en ce que*** le boîtier (1) est d'une conformation parallélépipédique rectangle.

8. Dispositif d'étanchement de fuite selon l'une quelconque des Revendications 1 à 6, ***caractérisé en ce que*** le boîtier (1) est d'une conformation cylindrique.

9. Dispositif d'étanchement de fuite selon l'une quelconque des Revendications précédentes, ***caractérisé en ce que*** les parties du boîtier sont munies, sur au moins deux côtés, d'une bride de fixation (12, 12', 13, 13') destinée à une fixation mutuelle étanche.

10. Dispositif d'étanchement de fuite selon la Revendication 9, ***caractérisé en ce que*** les brides de fixation (12, 12', 13, 13') sont situées sur des côtés opposés du boîtier (1).
